Europäisches Patentamt

European Patent Office

Office européen des brevets

(19)

(11) **EP 1 429 889 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: 02774342.6

(22) Anmeldetag: **12.09.2002**

(51) Int Cl.$^7$: **B23K 35/26**, C22C 12/00

(86) Internationale Anmeldenummer:
**PCT/DE2002/003396**

(87) Internationale Veröffentlichungsnummer:
**WO 2003/026834 (03.04.2003 Gazette 2003/14)**

(54) **BLEIFREIES WEICHLOT, INSBESONDERE ELEKTRONIKLOT**

LEAD-FREE SOFT SOLDER, ESPECIALLY ELECTRONICS SOLDER

BRASAGE TENDRE DEPOURVU DE PLOMB, NOTAMMENT BRASAGE ELECTRONIQUE

(84) Benannte Vertragsstaaten:
**DE FR GB**

(30) Priorität: **26.09.2001 DE 10147378**

(43) Veröffentlichungstag der Anmeldung:
**23.06.2004 Patentblatt 2004/26**

(73) Patentinhaber: **Infineon Technologies AG**
**81669 München (DE)**

(72) Erfinder: **RIEDL, Edmund**
**93083 Obertraubling (DE)**

(74) Vertreter: **Schäfer, Horst, Dr.**
**Schweiger & Partner**
**Patent- und Rechtsanwälte**
**Karl-Theodor-Strasse 69**
**80803 München (DE)**

(56) Entgegenhaltungen:
WO-A-02/097145        FR-A- 2 810 051
US-A- 5 368 814        US-A- 5 833 921

• **PATENT ABSTRACTS OF JAPAN vol. 2000, no. 02, 29. Februar 2000 (2000-02-29) & JP 11 320177 A (MURATA MFG CO LTD), 24. November 1999 (1999-11-24)**

**Beschreibung**

Die Erfindung betrifft ein bleifreies Weichlot, insbesondere ein Elektroniklot gemäß den unabhängigen Ansprüchen.

Im Elektronikbereich werden zur Herstellung von festen mechanischen und elektrischen Verbindungen Weichlote, insbesondere Blei-Zinn-Lote verwendet, deren Schmelzpunkt unterhalb von 330 °C liegt. Industriell eingesetzte Blei-Zinn-Lote sind bspw. genormt als L-PbSn2 (mit einem Zinngehalt von 2 %) bis L-Sn90Pb (mit einem Zinngehalt von 90 %). Daneben werden auch Blei-Zinn-Lote mit einem Gehalt von 0,1 % bis hin zu 5 % Antimon verwendet.

Derartige Blei-Zinn-Lote werden auch in der Halbleiterfertigung zum Verlöten von Halbleiterchips verwendet. Typische Legierungen haben allerdings Schmelzbereiche, die unterhalb des Schmelzpunktes von reinem Zinn ($T_{m,Sn}$ = 232 °C) liegen. Aus diesem Grund sind sie nicht für Einsatzzwecke geeignet, bei denen während des Betriebs des Halbleiterbauelements höhere Temperaturen auftreten als der Schmelzbereich des Lots beträgt.

Allerdings werden die thermischen Anforderungen an Elektronik- und Halbleiterbauelemente zunehmend höher, da bspw. hoch getaktete Prozessoren mit Taktfrequenzen im Gigahertzbereich sehr hohe Betriebstemperaturen erreichen können. So wird stellenweise auf Baugruppenebene nicht mehr mit eutektischem Pb-62Sn-Lot (mit einem Schmelzpunkt von $T_{m,Pb-62Sn}$ = 183 °C) gelötet, sondern mit bleifreien und damit bei höheren Temperaturen schmelzenden silberhaltigen Zinn-Loten, bspw. mit Zinn-Silber (SnAg; $T_{m,SnAG}$ = 221 °C) oder mit Zinn-Silber-Kupfer (SnAg-Cu; $T_{m,SnAgCu}$ = 217 °C).

Sollen Bauelemente mit diesen Loten verarbeitet werden, müssen die Lötstellen auf höhere Temperaturen gebracht werden, damit sich das Lot zuverlässig verflüssigt. Für ein optimales Lötergebnis ist eine Verarbeitungstemperatur von 15 bis 30 °C über dem Schmelzpunkt des Lotes notwendig. Wurden Bauelemente mit bleihaltigen Loten bei Temperaturen um 225 °C auf Systembauträger und Platinen gelötet, müssen die genannten bleifreien Lote bei Temperaturen von 260 °C oder mehr verarbeitet werden.

Um bei der Verarbeitung keinen Schaden zu nehmen, müssen die zu verlötenden Elektronik- und Halbleiterbauelemente eine derartige Temperierung überstehen können. Eine Temperaturgrenze für die lötende Verarbeitung von Halbleiterchips liegt bei 420 °C, da die meisten Halbleiter oberhalb dieser Temperatur zerstört werden. Viele Bauelemente, bspw. solche in Plastic Ball Grid Arrays oder anderen Kunststoffgehäusen werden allerdings bereits bei deutlich tieferen Temperaturen als 420 °C geschädigt.

Zur Herstellung von Lötverbindungen, die den hohen auftretenden Betriebstemperaturen standhalten und die bei der Verarbeitung zu keinen Schädigungen der Bauelemente führen, werden Lötverbindungen mit relativ hohem Bleianteil verwendet, z.B. Pb-5Sn-2Ag ($T_{m,Pb-5Sn-2Ag}$ = 288 °C) als Chiplot. Diese Legierung zeigt allerdings eine ausgeprägte Duktilität und kann zum mechanischen Ausfall der Chiplotverbindung nach bereits relativ kurzer Betriebsdauer führen.

Ein weiteres Problem der Verarbeitung von bleihaltigen Elektronikloten liegt in deren Langzeittoxizität, da Blei als giftiges Schmermetall geeignet ist sich in lebenden Organismen anzureichern und dort langfristig zu Schädigungen zu führen. Insbesondere bei der Verarbeitung, d.h. beim Verflüssigen des bleihaltigen Lotes werden Bleidämpfe freigesetzt, die mit hohem Aufwand gefiltert werden müssen. Die bleihaltigen Lote sind jedoch auch bei der Entsorgung und Wiederaufbereitung von Elektronikschrott äußerst problematisch.

WO 02/097145 A1 ist Stand der Technik nach Artikel 54(3) EPÜ und offenbart ein bleifreies Weichlot, das einen Legierungsanteil von Wismut zwischen 98 Gew-% und 82 Gew-%, einen Legierungsanteil von Silber zwischen 2 Gew-% und 18 Gew-% und einen Legierungsanteil von einem der Elemente Au, Cu, Pt, Sb, Zn, In, Sn, Ni und Ge zwischen 0.1 Gew-% und 5 Gew-% aufweist.

Ein Ziel der Erfindung besteht darin, ein Elektroniklot zur Verfügung zu stellen, das zukünftigen Anforderungen hinsichtlich Temperaturbeständigkeit und Umweltverträglichkeit gerecht werden kann.

Dieses Ziel der Erfindung wird mit dem Gegenstand der unabhängigen Ansprüche erreicht. Merkmale vorteilhafter Weiterbildungen der Erfindung ergeben sich aus den abhängigen Ansprüchen.

Dem gemäß weist in einer ersten Variante der Erfindung ein Weichlot, das insbesondere zur Anwendung im Elektronikbereich geeignet ist, die Legierungsbestandteile Wismut (Bi), Silber (Ag) und Kupfer (Cu) auf. Gemäß dieser ersten Variante der Erfindung ist vorgesehen, dass ein Legierungsanteil von Wis-mut zwischen 63 Gewichtsprozent (Gew-%) und 77 Gewichtsprozent, ein Legierungsanteil von Silber zwischen 20 Gew-% und 30 Gew-% und ein Legierungsanteil von Kupfer zwischen 0,1 Gew-% und 10 Gew-% beträgt.

Dieses erfindungsgemäße Weichlot mit den Legierungsbestandteilen Wismut, Silber und Kupfer enthält kein Blei und stellt damit ein umweltverträgliches Lot dar. Zudem weist es eine hohe mechanische Festigkeit auf und kann daher eine zuverlässige Verbindung von metallischen Flächen gewährleisten. Aufgrund des niedrigsten Schmelzpunktes dieses Weichlots von 258°C ist es geeignet für Verarbeitungstemperaturen unterhalb von 420°C und für Fügeverbindungen, die auch bei auftretenden Betriebstemperaturen bis 260°C nicht aufschmelzen dürfen. Daher können mit diesem Weichlot auch Metalle miteinander verlötet werden, die bisher mit umweltschädlichen hochbleihaltigen Legierungen gelötet werden mussten, da nur diese für höhere Schmelztemperaturen geeignet waren.

Bei diesem erfindungsgemäßen Weichlot wird die Lötverbindung zwischen flüssiger Legierung und den zu verlötenden Metallteilen nicht mehr wie bisher durch Zinn, sondern durch die Hauptkomponente Wismut hergestellt. Durch die Verwendung von Wismut als Hauptbestandteil eröffnen sich höhere Schmelztemperaturen und höhere Zuverlässigkeiten der Lötverbindung. Das erfindungsgemäße Weichlot kann mit den herkömmlichen Prozessen verarbeitet werden.

Vorzugsweise beträgt der Legierungsanteil von Wismut zwischen 68 und 72 Gew-%, der Legierungsanteil von Silber zwischen 24 und 26 Gew-% und der Legierungsanteil von Kupfer zwischen 4,8 und 5,2 Gew-%. Eine besonders bevorzugte Ausführungsform des erfindungsgemäßen Weichlots seht vor, dass der Legierungsanteil von Wismut ca. 70 Gew-%, der Legierungsanteil von Silber ca. 25 Gew-% und der Legierungsanteil von Kupfer ca. 5 Gew-% beträgt. Die Legierungsanteile von Wismut und Silber sehen dabei jeweils eine Toleranz von ±2 Gew-% vor. Der Legierungsanteil von Kupfer sieht eine Toleranz von ±1 Gew-% vor. Dieses Weichlot auf Wismutbasis (Bi52-Ag36-Cu12, Atom-Prozent) weist eine Solidustemperatur von 261°C und eine Liquidustemperatur von ca. 400°C auf und ist damit zur Verlötung von hochtemperaturbelasteten Elektronikbauteilen geeignet, die Betriebstemperaturen von deutlich über 260°C erreichen.

Weiterhin sieht eine zweite Variante der Erfindung ein Weichlot, insbesondere ein Elektroniklot vor, das die Legierungsbestandteile Wismut, Kupfer und Nickel aufweist, wobei eine Legierungsanteil von Wismut zwischen 40 Gew-% und 99,8 Gew-%, ein Anteil von Kupfer zwischen 0,1 Gew-% und 20 Gew-% und ein Anteil von Nickel zwischen 0,1 Gew-% und 20 Gew-% liegt. Dieses erfindungsgemäße Weichlot ist insbesondere geeignet für Verarbeitungstemperaturen unterhalb 420°C und für Fügeverbindungen, die bis 260°C nicht aufschmelzen dürfen, da die Solidustemperatur mindestens 266°C und die Liquidustemperatur zwischen 620°C und 850°C beträgt.

Eine erfindungsgemäße Ausführungsform des Weichlots sieht vor, dass der Legierungsanteil von Wismut zwischen 71 und 85 Gew-%, der Legierungsanteil von Kupfer zwischen 15 und 25 Gew-% und der Legierungsanteil von Nickel zwischen 0,1 und 5 Gew-% liegt, wobei eine bevorzugte Ausführungsform der Erfindung einen Legierungsanteil von Wismut zwischen 76 und 80 Gew-%, einen Legierungsanteil von Kupfer zwischen 18,5 und 21,5 Gew-% und einen Legierungsanteil von Nickel zwischen 1,8 und 2,2 Gew-% vorsieht. Eine besonders bevorzugte Ausführungsform des Weichlots sieht einen Anteil von Wismut von ca. 78 Gew-% (±2 Gew-%), einen Anteil von Kupfer von ca. 20 Gew-% (±2 Gew-%) und einen Anteil von Nickel von ca. 2 Gew-% (±1 Gew-%) vor. Dieses Weichlot kann als Bi52-Cu43-Ni5 (in Atom-Prozent) bezeichnet werden und hat eine Solidustemperatur von ca. 266°C und eine Liquidustemperatur von ca. 830 bis 850°C.

Eine alternative Ausführungsform des erfindungsgemäßen Weichlots sieht einen Legierungsanteil von Wismut zwischen 82 und 96 Gew-%, einen Legierungsanteil von Kupfer zwischen 5 und 15 Gew-% und einen Legierungsanteil von Nickel zwischen 0,1 und 3 Gew-% vor, wobei vorzugsweise der Anteil von Wismut zwischen 87 und 91 Gew-%, der Anteil von Kupfer vorzugsweise zwischen 9 und 11 Gew-% und der Anteil von Nickel vorzugsweise zwischen 0,8 und 1,2 Gew-% beträgt. Eine besonders bevorzugte Ausführungsform sieht einen Legierungsanteil von Wismut von ca. 89 Gew-% (±2 Gew-%), eine Legierungsanteil von Kupfer von ca. 10 Gew-% (±2 Gew-%) und einen Legierungsanteil von Nickel von ca. 1 Gew-% (±0,5 Gew-%) vor. Dieses Weichlot kann als Bi71-Cu26-Ni3 (in Atom-Prozent) bezeichnet werden und weist eine Solidustemperatur von 266°C sowie eine Liquidustemperatur von 720 bis 740°C auf.

Eine weitere erfindungsgemäße Ausführungsform des Weichlots sieht einen Legierungsanteil von Wismut zwischen 87 und 99,8 Gew-%, einen Legierungsanteil von Kupfer zwischen 2 und 8 Gew-% und einen Legierungsanteil von Nickel zwischen 0,1 und 3 Gew-% vor, wobei vorzugsweise der Anteil von Wismut zwischen 92 und 96 Gew-%, der Anteil von Kupfer zwischen 4 und 6 Gew-% und der Anteil von Nickel zwischen 0,8 und 1,2 Gew-% beträgt. Besonders bevorzugt ist eine Ausführungsform, die einen Legierungsanteil von Wismut von ca. 94 Gew-% (±2 Gew-%), einen Legierungsanteil von Kupfer von ca. 5 Gew-% (±2 Gew-%) sowie einen Legierungsanteil von Nickel von ca. 1 Gew-% (±0,5 Gew-%) vorsieht. Dieses Weichlot kann als Bi82-Cu15-Ni3 (in Atom-Prozent) charakterisiert werden und weist eine Solidustemperatur von 266°C und eine Liquidustemperatur zwischen 620 bis 660°C auf.

Eine weitere alternative Ausführungsform des Weichlots sieht einen Legierungsanteil von Wismut zwischen 88 und 99,8 Gew-%, einen Legierungsanteil von Kupfer zwischen 2 und 8 Gew-% und einen Legierungsanteil von Nickel von ca. 0,1 Gew-% vor. Vorzugsweise beträgt der Anteil von Wismut zwischen 93 und 97 Gew-%, der Legierungsanteil von Kupfer zwischen 4 und 6 Gew-% und der Legierungsanteil von Nickel ca. 0,1 Gew-%. Besonders bevorzugt ist eine Ausführungsform, die einen Legierungsanteil von Wismut von ca. 95 Gew-% (±2 Gew-%) und einen Legierungsanteil von Kupfer von ca. 5 Gew-% (±2 Gew-%) vorsieht. Der Legierungsanteil von Nickel liegt jeweils bei 0,1 Gew-% (±0,05 Gew-%). Dieses als Bi85-Cu15-Ni0,3 (in Atom-Prozent) bezeichnete Weichlot weist eine Solidustemperatur von 266°C und eine Liquidustemperatur von 620 bis 660°C auf.

Ein weiteres erfindungsgemäßes Weichlot gemäß einer dritten Variante weist die Legierungsbestandteile Wismut, Silber und Nickel auf. Dieses Wismut-Silber-Nickel-Lot ist geeignet für Verarbeitungstemperaturen unterhalb 420°C und für Fügeverbindungen, die bis 260°C nicht aufschmelzen dürfen. Die Solidustemperatur dieses Weichlots liegt bei ca. 260°C und die Liquidustemperatur zwischen 360°C und 430°C, je nach Mischungsverhältnis der Legierungsbestandteile.

Eine erste Alternative dieses Wismut-Silber-Nickel-Lots sieht einen Legierungsanteil von Wismut zwischen 61 und 75 Gew-%, einen Legierungsanteil von Silber zwischen 25 und 35 Gew-% und einen Legierungsanteil von Nickel zwischen 0,1 und 5 Gew-% vor. Vorzugsweise liegt der Legierungsanteil von Wismut zwischen 66 und 70 Gew-%, der Legierungsanteil von Silber zwischen 28 und 32 Gew-% und der Legierungsanteil von Nickel zwischen 1,8 und 2,2 Gew-%, wobei eine besonders bevorzugte Ausführungsform einen Legierungsanteil von Wismut von ca. 68 Gew-%, einen Legierungsanteil von Silber von ca. 30 Gew-% und einen Legierungsanteil von Nickel von ca. 2 Gew-% vorsieht. Dieses Bi51-Ag44-Ni5 (in Atom-Prozent) weist eine Solidustemperatur von 260°C und eine Liquidustemperatur von 430°C auf.

Eine alternative Ausführungsform des Weichlots sieht einen von Wismut zwischen 76 und 80 Gew-%, der Legierungsanteil von Silber zwischen 19 und 21 Gew-% und der Legierungsanteil von Nickel zwischen 1,8 und 2,2 Gew-% liegt. Eine besonders bevorzugte Ausführungsform der Erfindung sieht einen Legierungsanteil von Wismut von ca. 78 Gew-%, einen Legierungsanteil von Silber von ca. 20 Gew-% und einen Legierungsanteil von Nickel von ca. 2 Gew-% vor. Dieses Weichlot kann als Bi63-Ag31-Ni6 (in Atom-Prozent) bezeichnet werden und weist eine Solidustemperatur von 260°C und eine Liquidustemperatur von 410°C auf.

Bei allen diesen genannten Varianten des Weichlots (Bi-Ag-Cu, Bi-Cu-Ni und Bi-Ag-Ni) stellt Wismut jeweils die bindende Hauptkomponente dar, wodurch sich gegenüber den herkömmlichen Zinn-Loten höhere Verarbeitungstemperaturen erzielen lassen. Zudem stellen diese Wismut-Lote eine umweltverträglichere Alternative dar, die im Betrieb eine sehr hohe Zuverlässigkeit aufweisen. Alle die genannten erfindungsgemäßen Legierungen können problemlos mit den bereits vorhandenen Verarbeitungsmaschinen verarbeitet werden.

Die Erfindung wird nun anhand von Ausführungsformen mit Bezug auf die beiliegenden Figuren näher erläutert.

Figur 1      zeigt ein binäres Zustandsdiagramm für Wismut und Kupfer.
Figur 2      zeigt ein binäres Zustandsdiagramm für Silber und Wismut.
Figur 3      zeigt ein ternäres Zustandsdiagramm für Silber, Wismut und Kupfer.
Figur 4      zeigt ein weiteres binäres Zustandsdiagramm für Wismut und Kupfer.
Figur 5      zeigt ein binäres Zustandsdiagramm für Wismut und Nickel.
Figur 6      zeigt ein ternäres Zustandsdiagramm für Wismut, Kupfer und Nickel.
Figur 7      zeigt ein weiteres binäres Zustandsdiagramm für Wismut und Silber.

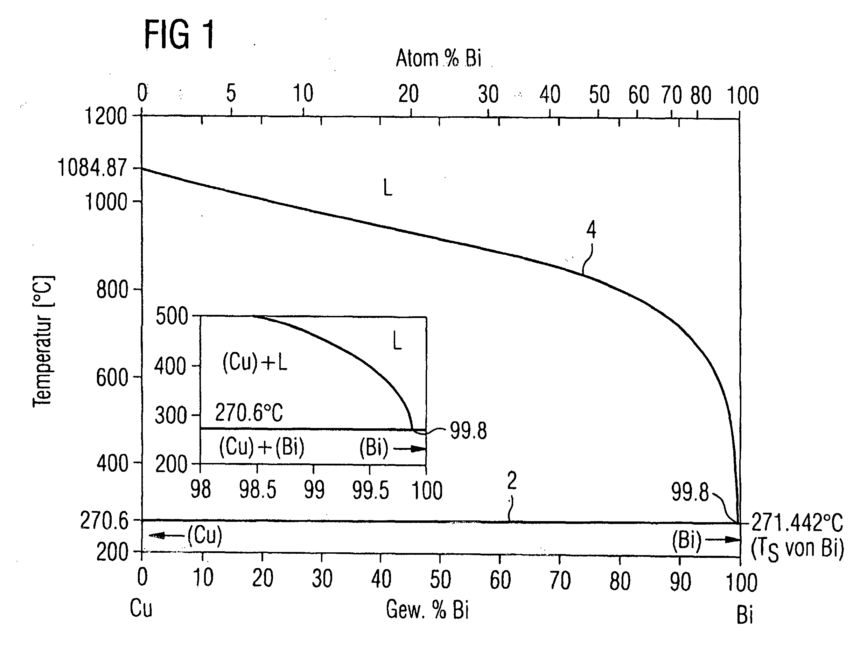

Figur 1 zeigt ein binäres Phasen- bzw. Zustandsdiagramm für Wismut und Kupfer, wobei auf einer unteren horizontalen Achse des Diagramms von links (100 Gew-%) nach rechts (0 Gew-%) abnehmende Gewichtsprozentanteile von Kupfer (Cu) aufgetragen sind. Dem entsprechend sind von rechts (100 Gew-%) nach links (0 Gew-%) abnehmende Gewichtsprozentanteile von Wismut (Bi) aufgetragen. Auf einer oberen horizontalen Achse sind von links (0 atom-%) nach rechts (100 atom-%) zunehmende Atom-Prozentanteile von Wismut aufgetragen. Auf einer vertikalen Achse des Diagramms sind Temperaturen von 200 °C bis 1200 °C aufgetragen.

Das Diagramm verdeutlicht einen Solidusbereich unterhalb einer ersten Soliduslinie 2, bei dem sowohl Kupfer als auch Wismut als reine Kristalle vorliegen. Dieser Sachverhalt ist im Diagramm verdeutlicht durch die folgende Angabe

$$(Cu) + (Bi),$$

bei denen jeweils die Elementsymbole in Klammern gesetzt sind (vgl. den kleinen Ausschnitt innerhalb des Diagramms). Dieser Bereich liegt unterhalb einer Temperatur von 270,6°C.

Zwischen der ersten Soliduslinie 2 und einer ersten Liquiduslinie 4 liegt eine Teilschmelze vor, bei der einzelne Kupferkristalle (Cu) in einer Wismutschmelze - hier als L charakterisiert - verteilt sind. Dieser Zusammenhang ist durch die Angabe

$$(Cu) + L$$

verdeutlicht.

Wie anhand des Schnittpunktes der ersten Liquiduslinie 4 mit der linken vertikalen Diagrammachse erkennbar ist, weist reines Kupfer einen Erstarrungspunkt von 1084,87°C auf. Mit zunehmendem Anteil von Wismut in der Legierung sinkt dieser Schmelzpunkt ab auf den Wert von 270,6°C bei einem Legierungsanteil von 99,8 Gew-% Wismut (vgl. kleines Bild in der Mitte). Diese Legierungszusammensetzung wird durch den Schnittpunkt der ersten Liquiduslinie 4 mit der ersten Soliduslinie 2 unmittelbar an der rechten vertikalen Achse verdeutlicht.

Oberhalb der ersten Liquiduslinie 4 liegt die Bi-Cu-Legierung in reiner Schmelze vor, in der keine einzelnen Wismut- oder Kupferkristalle enthalten sind. Dieser Bereich ist im Diagramm durch ein "L" charakterisiert.

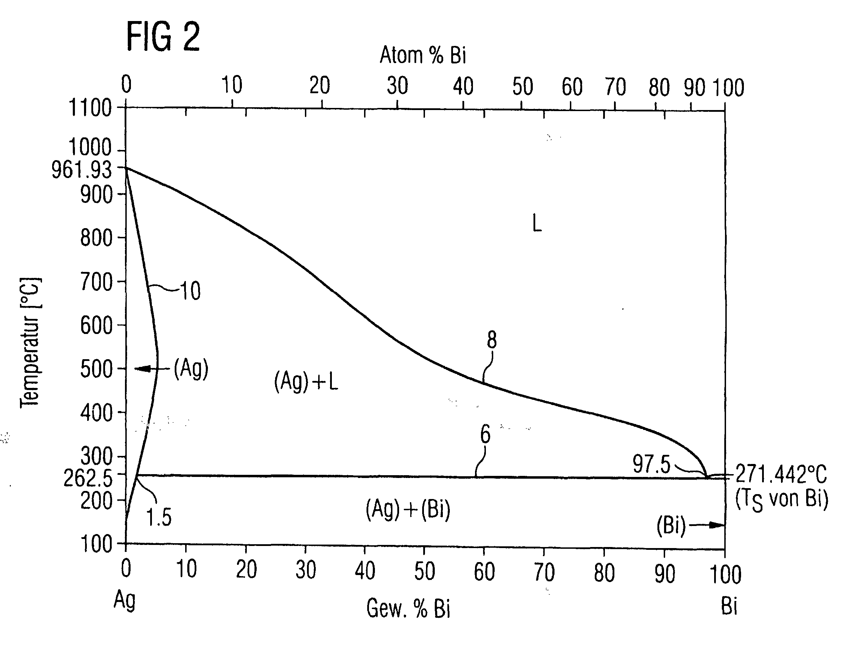

Figur 2 zeigt ein entsprechendes binäres Zustandsdiagramm für Silber und Wismut, wobei auf einer unteren horizontalen Achse des Diagramms von links (100 Gew-%) nach rechts (0 Gew-%) abnehmende Gewichtsprozentanteile von Silber (Ag) aufgetragen sind. Dem entsprechend sind von rechts (100 Gew-%) nach links (0 Gew-%) abnehmende Gewichtsprozentanteile von Wismut (Bi) aufgetragen. Auf einer oberen horizontalen Achse sind von links (0 atom-%) nach rechts (100 atom-%) zunehmende Atom-Prozentanteile von Wismut aufgetragen. Auf einer vertikalen Achse des Diagramms sind Temperaturen von 100 °C bis 1100 °C aufgetragen.

Das Diagramm verdeutlicht einen Solidusbereich unterhalb einer zweiten Soliduslinie 6, bei dem sowohl Silber als auch Wismut als reine Kristalle vorliegen. Dieser Sachverhalt ist im Diagramm verdeutlicht durch die folgende Angabe

$$(Ag) + (Bi),$$

bei denen jeweils die Elementsymbole in Klammern gesetzt sind. Dieser Bereich liegt unterhalb einer Temperatur von 262,5 °C.

Zwischen der zweiten Soliduslinie 6 und einer zweiten Liquiduslinie 8 liegt eine Teilschmelze vor, bei der einzelne Silberkristalle (Ag) in einer Wismutschmelze - hier als L charakterisiert - verteilt sind. Dieser Zusammenhang ist durch die Angabe

$$(Ag) + L$$

verdeutlicht.

Wie anhand des Schnittpunktes der zweiten Liquiduslinie 8 mit der linken vertikalen Diagrammachse erkennbar ist, weist reines Silber einen Erstarrungspunkt von 961,93 °C auf. Mit zunehmendem Anteil von Wismut in der Legierung sinkt dieser Schmelzpunkt ab auf den Wert von 262,5 °C bei einem Legierungsanteil von 97,5 Gew-% Wismut. Diese Legierungszusammensetzung wird durch den Schnittpunkt der zweiten Liquiduslinie 8 mit der zweiten Soliduslinie 6 unmittelbar an der rechten vertikalen Achse verdeutlicht.

Silber weist zudem die Eigenschaft auf, bei hohen Konzentrationen und bei Temperaturen oberhalb von ca. 170 °C bis zu seinem Schmelzpunkt von ca. 961 °C als sog. $\alpha$-Mischkristall aufzutreten, was durch einen Bereich links einer schwach ausgebauchten Kurve 10 im Diagramm verdeutlicht ist.

Oberhalb der zweiten Liquiduslinie 8 liegt die Wismut-SilberLegierung in reiner Schmelze vor, in der keine einzelnen Wismut- oder Silberkristalle enthalten sind, die Metalle somit vollständig gelöst sind. Dieser Bereich ist im Diagramm durch ein "L" charakterisiert.

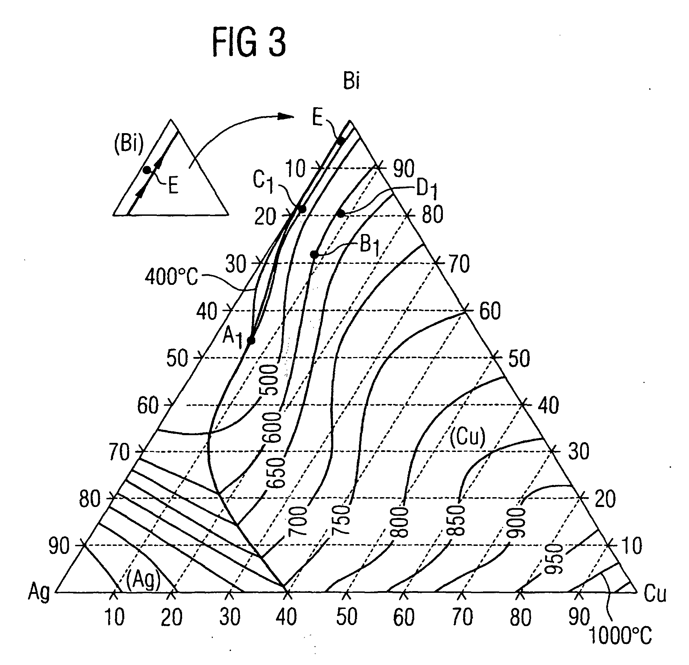

Figur 3 zeigt ein ternäres Zustandsdiagramm für Silber, Wismut und Kupfer, bei dem auf den drei Achsen des Dreiecks jeweils Atom-Prozente zwischen 0 und 100 der drei Komponenten aufgetragen sind. Auf der horizontalen Achse sind von rechts (100 atom-% Cu) nach links (0 atom-% Cu) abnehmende Konzentrationen von Kupfer aufgetragen. Auf der linken Achse, die nach rechts geneigt ist, sind von unten (100 atom-% Ag) nach oben (0 atom-% Ag) abnehmende Konzentrationen von Silber aufgetragen. Auf der rechten Achse, die nach links geneigt ist, sind von oben (100 atom-% Bi) nach unten (0 atom-% Bi) abnehmende Konzentrationen von Wismut aufgetragen.

Innerhalb der drei Achsen sind Temperaturlinien aufgetragen. Erkennbar ist eine ausgeprägte dritte Liquiduslinie 12 in der linken Hälfte des von den drei Achsen aufgespannten Dreiecks, an der die Temperaturlinien jeweils einen ausgeprägten Knick aufweisen.

Es sind dort vier verschiedene Punkte A1, B1, C1 und D1 eingetragen, welche die in folgender Tabelle zusammengefassten vier Legierungszusammensetzungen charakterisieren. Der Punkt $A_1$ stellt eine bevorzugte Legierungszusammensetzung der Erfindung dar.

| Legierungen | Solidustemperatur [°C] | Liquidustemperatur [°C] |
|---|---|---|
| A1: Bi52-Ag36-Cu12 [atom-%] | 261 | ca. 400 |
| B1: Bi70-Ag16-Cu14 [atom-%] | 261 | ca. 350 |
| C1: Bi82-Ag18-Cu0,3 [atom-%] | 261 | ca. 350 |
| D1: Bi78-Ag8-Cu14 [atom-%] | 261 | ca. 350 |

Die Legierung A1 (Bi52-Ag36-Cu12) weist Legierungsanteile von ca. 70 Gew-% (±2 Gew-%) Wismut, ca. 25 Gew-% (±2 Gew-%) Silber und ca. 5 Gew-% (±1 Gew-%) Kupfer auf. Die Legierung B1 (Bi70-Ag16-Cu14) weist Legierungsanteile von ca. 85 Gew-% (±2 Gew-%) Wismut, ca. 10 Gew-% (±2 Gew-%) Silber und ca. 5 Gew-% (±1 Gew-%) Kupfer auf. Die Legierung C1 (Bi82-Ag18-Cu0,3) weist Legierungsanteile von ca. 90 Gew-% (±2 Gew-%) Wismut, ca. 10 Gew-% (±2 Gew-%) Silber und ca. 0,1 Gew-% (±0,1 Gew-%) Kupfer auf. Die Legierung D1 (Bi78-Ag8-Cu14) weist Legierungsanteile von ca. 90 Gew-% (±2 Gew-%) Wismut, ca. 5 Gew-% (±2 Gew-%) Silber und ca. 5 Gew-% (±1 Gew-%) Kupfer auf.

Die eingetragenen Legierungen A1 bis D1 sind ggf. als größere Bereiche zu verstehen, die somit in dem Diagramm eine weitere Ausdehnung als dargestellt haben können.

Ein vergrößerter Ausschnitt der obersten Spitze des durch das Diagramm aufgespannten Dreiecks verdeutlicht einen Punkt E, bei dem die drei Komponenten in kristalliner Form bei einer Temperatur von ca. 258 °C jeweils im Gleichgewicht mit der Schmelze L stehen, was durch folgendes Reaktionsschema

$$E: L \Leftrightarrow (Ag) + (Bi) + (Cu)$$

verdeutlicht wird.

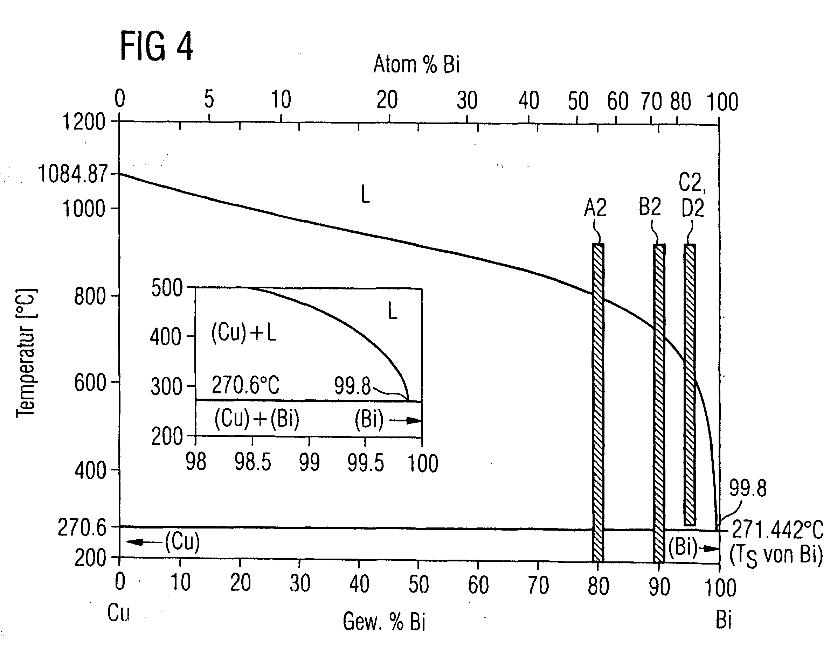

Figur 4 zeigt ein binäres Zustandsdiagramm für Wismut und Kupfer entsprechend Figur 1, wobei hier zusätzlich bevorzugte Legierungszusammensetzungen A2, B2, C2 und D2 entsprechend folgender Tabelle eingezeichnet sind.

| Legierungen | Solidustemperatur [°C] | Liquidustemperatur [°C] |
|---|---|---|
| A2: Bi52-Cu43-Ni5 [atom-%] | 266 | 830 .. 850 |
| B2: Bi71-Cu26-Ni3 [atom-%] | 266 | 720 .. 740 |
| C2: Bi82-Cu15-Ni3 [atom-%] | 266 | 620 .. 660 |
| D2: Bi85-Cu15-Ni0,3 [atom-%] | 266 | 620 .. 660 |

Die Legierung A2 (Bi52-Cu43-Ni5) weist Legierungsanteile von ca. 78 Gew-% (±2 Gew-%) Wismut, ca. 20 Gew-% (±2 Gew-%) Kupfer und ca. 2 Gew-% (±1 Gew-%) Nickel auf. Die Legierung B2 (Bi71-Cu26-Ni3) weist Legierungsanteile von ca. 89 Gew-% (±2 Gew-%) Wismut, ca. 10 Gew-% (±2 Gew-%) Kupfer und ca. 1 Gew-% (±0,5 Gew-%) Nickel auf. Die Legierung C2 (Bi82-Cu15-Ni3) weist Legierungsanteile von ca. 94 Gew-% (±2 Gew-%) Wismut, ca. 5 Gew-% (±2 Gew-%) Kupfer und ca. 1 Gew-% (±0,5 Gew-%) Nickel auf. Die Legierung D2 (Bi85-Cu15-Ni0,3) weist Legierungsanteile von ca. 95 Gew-% (±2 Gew-%) Wismut, ca. 5 Gew-% (±2 Gew-%) Kupfer und ca. 0,1 Gew-% (±0,05 Gew-%) Nickel auf.

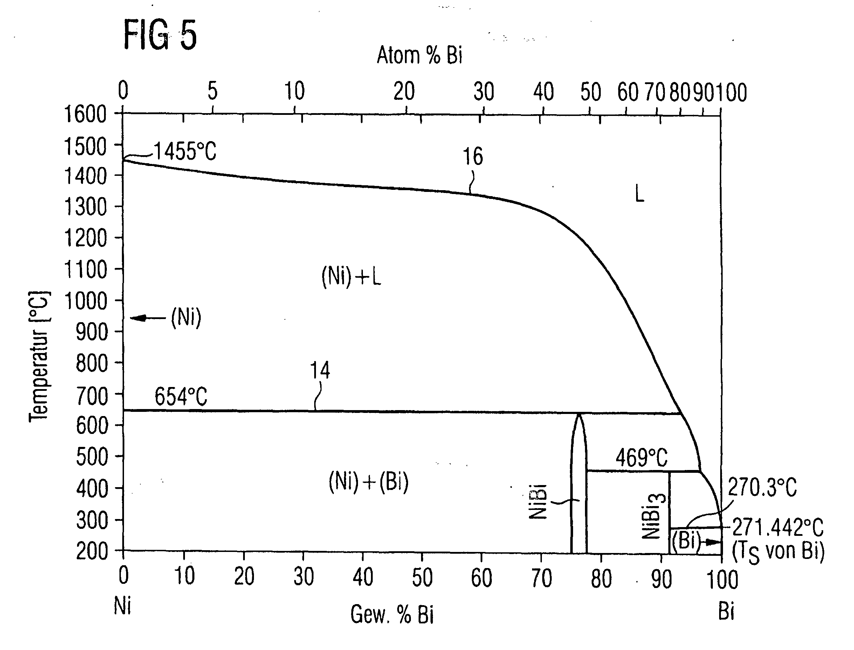

Figur 5 zeigt weiterhin ein binäres Zustandsdiagramm für Wismut und Nickel, wobei auf einer unteren horizontalen Achse des Diagramms von links (100 Gew-%) nach rechts (0 Gew-%) abnehmende Gewichtsprozentanteile von Nickel (Ni) aufgetragen sind. Dem entsprechend sind von rechts (100 Gew-%) nach links (0 Gew-%) abnehmende Gewichtsprozentanteile von Wismut (Bi) aufgetragen. Auf einer oberen horizontalen Achse sind von links (0 atom-%) nach rechts (100 atom-%) zunehmende Atom-Prozentanteile von Wismut aufgetragen. Auf einer vertikalen Achse des Diagramms sind Temperaturen von 200 °C bis 1600 °C aufgetragen.

Das Diagramm verdeutlicht einen Solidusbereich unterhalb einer dritten Soliduslinie 14, bei dem sowohl Nickel als auch Wismut als reine Kristalle vorliegen. Dieser Sachverhalt ist im Diagramm verdeutlicht durch die folgende Angabe

$$(Ni) + (Bi),$$

bei denen jeweils die Elementsymbole in Klammern gesetzt sind. Dieser Solidusbereich liegt unterhalb einer Temperatur von 654 °C.

Zwischen der dritten Soliduslinie 14 und einer vierten Liquiduslinie 16 liegt eine Teilschmelze vor, bei der einzelne Nickelkristalle (Ni) in einer Wismutschmelze - hier als L charakterisiert - verteilt sind. Dieser Zusammenhang ist durch die Angabe

$$(Ni) + L$$

verdeutlicht.

Wie anhand des Schnittpunktes der vierten Liquiduslinie 16 mit der linken vertikalen Diagrammachse erkennbar ist, weist reines Nickel einen Erstarrungspunkt von 1455 °C auf. Mit zunehmendem Anteil von Wismut in der Legierung sinkt dieser Schmelzpunkt in mehreren Stufen ab auf einen Wert von weniger als 200 °C bei einem Legierungsanteil von 99,8 Gew-% Wismut.

Bei einem Gewichtsprozentanteil zwischen ca. 74 Gew-% und 77 Gew-% Wismut bildet sich bei Temperaturen unterhalb von 654 °C eine intermetallische Phase NiBi, die unterhalb der dritten Soliduslinie 14 zu dieser hin spitz zuläuft. Die intermetallische Phase stellt sich bei Temperaturen knapp unterhalb von 654 °C somit nur bei einem exakten Verhältnis von Nickel zu Wismut ein.

Rechts von der intermetallischen Phase NiBi befindet sich ein Eutektikum 18 bei einer Temperatur von 469 °C, charakterisiert durch eine waagrechte Linie. Eine weitere intermetallische Phase $NiBi_3$ bildet sich bei einem festen Mischungsverhältnis von ca. 90 Gew-% Bi unterhalb des Eutektikums 18, d.h. bei Temperaturen von weniger als 469 °C aus.

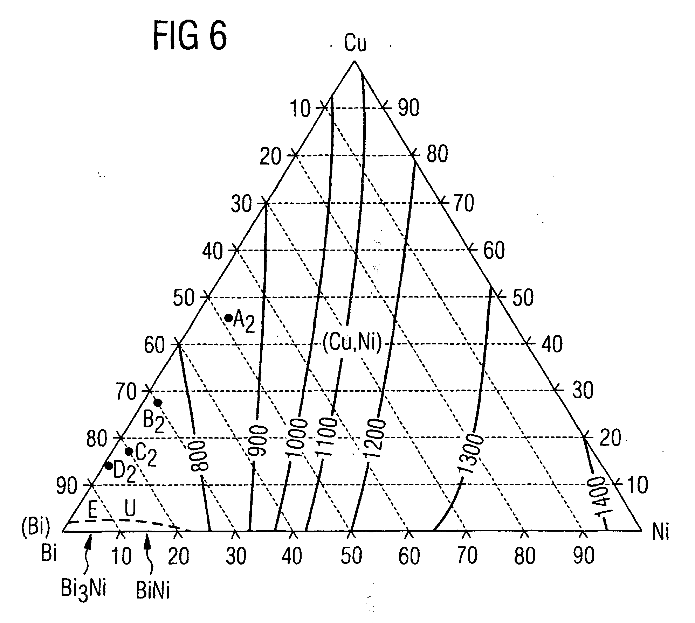

Figur 6 zeigt ein ternäres Zustandsdiagramm für Wismut, Kupfer und Nickel, bei dem auf den drei Achsen des Dreiecks jeweils Atom-Prozente zwischen 0 und 100 der drei Komponenten aufgetragen sind. Auf der horizontalen Achse sind von rechts (100 atom-% Ni) nach links (0 atom-% Ni) abnehmende Konzentrationen von Nickel aufgetragen. Auf der linken Achse, die nach rechts geneigt ist, sind von unten (100 atom-% Bi) nach oben (0 atom-% Bi) abnehmende Konzentrationen von Wismut aufgetragen. Auf der rechten Achse, die nach links geneigt ist, sind von oben (100 atom-% Cu) nach unten (0 atom-% Cu) abnehmende Konzentrationen von Kupfer aufgetragen.

Innerhalb der drei Achsen sind Temperaturlinien erkennbar. Eine Soliduslinie wie in Figur 3 ist hier nicht enthalten, so dass stetige Temperaturverläufe aufgetragen sind.

In einem linken unteren Eckbereich des Diagramms ist ein unterbrochener Linienverlauf erkennbar, der verschiedene Übergangszustände zwischen den reinen Kristallen, den auftretenden intermetallischen Phasen sowie der Schmelze charakterisiert:

$$E: L \Leftrightarrow (Bi) + Bi_3Ni + (Cu, Ni)$$

$$U: L + BiNi \Leftrightarrow Bi_3Ni + (Cu,Ni)$$

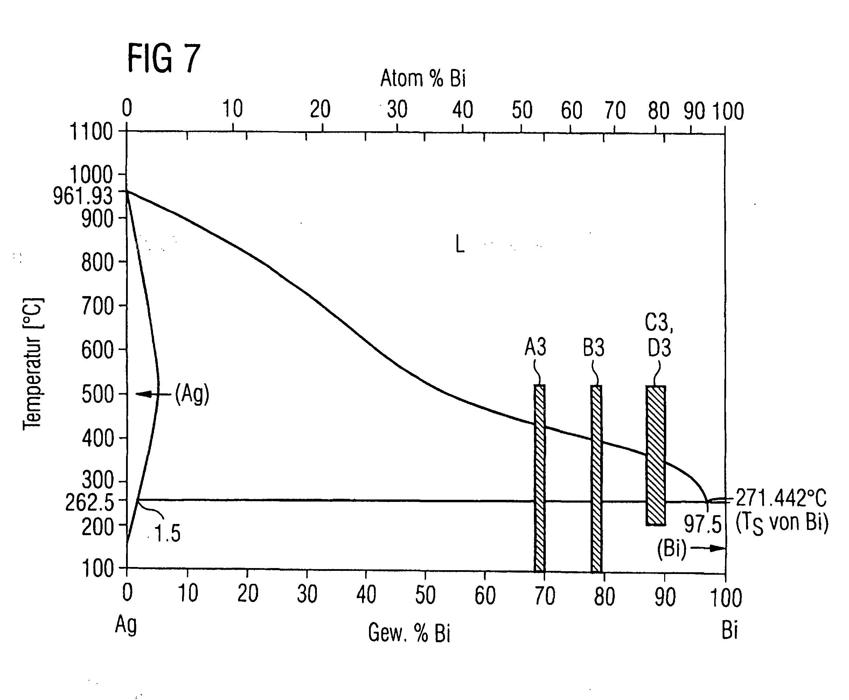

Figur 7 zeigt schließlich ein weiteres binäres Zustandsdiagramm für Silber und Wismut entsprechend Figur 2, wobei hier zusätzlich Legierüngszusammensetzungen A3, B3, C3 und D3 entsprechend folgender Tabelle eingezeichnet sind. Die Punkte A3 und B3 stellen bevorzugte Legierungszusammensetzungen der Erfindung dar.

| Legierungen | Solidustemperatur [°C] | Liquidustemperatur [°C] |
|---|---|---|
| A3: Bi51-Ag44-Ni5 [atom-%] | 260 | 430 |
| B3: Bi63-Ag31-Ni6 [atom-%] | 260 | 410 |
| C3: Bi77-Ag17-Ni6 [atom-%] | 260 | 380 |
| D3: Bi82-Ag18-Ni0,3 [atom-%] | 260 | 360 |

Die Legierung A3 (Bi51-Ag44-Ni5) weist Legierungsanteile von ca. 68 Gew-% (±2 Gew-%) Wismut, ca. 30 Gew-% (±2 Gew-%) Silber und ca. 2 Gew-% (±1 Gew-%) Nickel auf. Die Legierung B3 (Bi63-Ag31-Ni6) weist Legierungsanteile von ca. 78 Gew-% (±2 Gew-%) Wismut, ca. 20 Gew-% (±2 Gew-%) Silber und ca. 2 Gew-% (±1 Gew-%) Nickel auf. Die Legierung C3 (Bi77-Ag17-Ni6) weist Legierungsanteile von ca. 88 Gew-% (±2 Gew-%) Wismut, ca. 10 Gew-% (±2 Gew-%) Silber und ca. 2 Gew-% (±1 Gew-%) Nickel auf. Die Legierung D3 (Bi82-Ag18-Ni0,3) weist Legierungsanteile von ca. 90 Gew-% (±2 Gew-%) Wismut, ca. 10 Gew-% (±2 Gew-%) Silber und ca. 0,1 Gew-% (±0,01 Gew-%) Nickel auf.

Die eingetragenen Legierungen A3 bis D3 sind ggf. als größere Bereiche zu verstehen, die somit in dem Diagramm eine weitere Ausdehnung als dargestellt haben können.

**Patentansprüche**

1. Weichlot, insbesondere Elektroniklot, bestehend aus den Legierungsbestandteilen Wismut, Silber und Kupfer, wobei ein Legierungsanteil von Wismut zwischen 63 Gew-% und 77 Gew-%, ein Legierungsanteil von Silber zwischen 20 Gew-% und 30 Gew-% und ein Legierungsanteil von Kupfer zwischen 0,1 Gew-% und 10 Gew-% beträgt.

2. Weichlot nach Anspruch 1,
   **dadurch gekennzeichnet, dass**
   der Legierungsanteil von Wismut zwischen 68 Gew-% und 72 Gew-%, der Legierungsanteil von Silber zwischen 24 Gew-% und 26 Gew-% und der Legierungsanteil von Kupfer zwischen 4,8 Gew-% und 5,2 Gew-% beträgt.

3. Weichlot nach Anspruch 1 oder 2,
   **dadurch gekennzeichnet, dass**
   der Legierungsanteil von Wismut bei ca. 70 Gew-%, der Legierungsanteil von Silber bei ca. 25 Gew-% und der Legierungsanteil von Kupfer bei ca. 5 Gew-% beträgt.

4. Weichlot, insbesondere Elektroniklot, bestehend aus den Legierungsbestandteilen Wismut, Kupfer und Nickel, wobei ein Legierungsanteil von Wismut zwischen 40 Gew-% und 99,8 Gew-%, ein Legierungsanteil von Kupfer zwischen 0,1 Gew-% und 20 Gew-% und ein Legierungsanteil von Nickel zwischen 0,1 Gew-% und 20 Gew-% beträgt.

5. Weichlot nach Anspruch 4,
   **dadurch gekennzeichnet, dass**
   der Legierungsanteil von Wismut zwischen 71 Gew-% und 85 Gew-%, der Legierungsanteil von Kupfer zwischen 15 Gew-% und 25 Gew-% und der Legierungsanteil von Nickel zwischen 0,1 Gew-% und 5 Gew-% beträgt.

6. Weichlot nach Anspruch 4 oder 5,
   **dadurch gekennzeichnet, dass**
   der Legierungsanteil von Wismut zwischen 76 Gew-% und 80 Gew-%, der Legierungsanteil von Kupfer zwischen 18,5 Gew-% und 21,5 Gew-% und der Legierungsanteil von Nickel zwischen 1,8 Gew-% und 2,2 Gew-% beträgt.

7. Weichlot nach einem der Ansprüche 4 bis 6,
   **dadurch gekennzeichnet, dass**
   der Legierungsanteil von Wismut bei ca. 78 Gew-%, der Legierungsanteil von Kupfer bei ca. 20 Gew-% und der Legierungsanteil von Nickel bei ca. 2 Gew-% beträgt.

8. Weichlot nach Anspruch 4,
   **dadurch gekennzeichnet, dass**
   der Legierungsanteil von Wismut zwischen 82 Gew-% und 96 Gew-%, der Legierungsanteil von Kupfer zwischen 5 Gew-% und 15 Gew-% und der Legierungsanteil von Nickel zwischen 0,1 Gew-% und 3 Gew-% beträgt.

9. Weichlot nach Anspruch 4 oder 8,
   **dadurch gekennzeichnet, dass**
   der Legierungsanteil von Wismut zwischen 87 Gew-% und 91 Gew-%, der Legierungsanteil von Kupfer zwischen 9 Gew-% und 11 Gew-% und der Legierungsanteil von Nickel zwischen 0,8 Gew-% und 1,2 Gew-% beträgt.

10. Weichlot nach einem der Ansprüche 4, 8 oder 9,
    **dadurch gekennzeichnet, dass**
    der Legierungsanteil von Wismut bei ca. 89 Gew-%, der Legierungsanteil von Kupfer bei ca. 10 Gew-% und der Legierungsanteil von Nickel bei ca. 1 Gew-% beträgt.

11. Weichlot nach Anspruch 4,
    **dadurch gekennzeichnet, dass**
    der Legierungsanteil von Wismut zwischen 87 Gew-% und 99,8 Gew-%, der Legierungsanteil von Kupfer zwischen 2 Gew-% und 8 Gew-% und der Legierungsanteil von Nickel zwischen 0,1 Gew-% und 3 Gew-% beträgt.

12. Weichlot nach Anspruch 4 oder 11,
    **dadurch gekennzeichnet, dass**
    der Legierungsanteil von Wismut zwischen 92 Gew-% und 96 Gew-%, der Legierungsanteil von Kupfer zwischen 4 Gew-% und 6 Gew-% und der Legierungsanteil von Nickel zwischen 0,8 Gew-% und 1,2 Gew-% beträgt.

**13.** Weichlot nach einem der Ansprüche 4, 11 oder 12,
**dadurch gekennzeichnet, dass**
der Legierungsanteil von Wismut bei ca. 94 Gew-%, der Legierungsanteil von Kupfer bei ca. 5 Gew-% und der Legierungsanteil von Nickel bei ca. 1 Gew-% beträgt.

**14.** Weichlot nach Anspruch 4,
**dadurch gekennzeichnet, dass**
der Legierungsanteil von Wismut zwischen 88 Gew-% und 99,8 Gew-%, der Legierungsanteil von Kupfer zwischen 2 Gew-% und 8 Gew-% und der Legierungsanteil von Nickel bei ca. 0,1 Gew-% beträgt.

**15.** Weichlot nach Anspruch 4 oder 14,
**dadurch gekennzeichnet, dass**
der Legierungsanteil von Wismut zwischen 93 Gew-% und 97 Gew-%, der Legierungsanteil von Kupfer zwischen 4 Gew-% und 6 Gew-% und der Legierungsanteil von Nickel bei ca. 0,1 Gew-% beträgt.

**16.** Weichlot nach einem der Ansprüche 4, 14 oder 15,
**dadurch gekennzeichnet, dass**
der Legierungsanteil von Wismut bei ca. 95 Gew-%, der Legierungsanteil von Kupfer bei ca. 5 Gew-% und der Legierungsanteil von Nickel bei ca. 0,1 Gew-% beträgt.

**17.** Weichlot, insbesondere Elektroniklot, bestehend aus den Legierungsbestandteilen Wismut, Silber und Nickel, wobei ein Legierungsanteil von Wismut zwischen 61 Gew-% und 75 Gew-%, ein Legierungsanteil von Silber zwischen 25 Gew-% und 35 Gew-% und ein Legierungsanteil von Nickel zwischen 0,1 Gew-% und 5 Gew-% beträgt.

**18.** Weichlot nach Anspruch 17,
**dadurch gekennzeichnet, dass**
der Legierungsanteil von Wismut zwischen 66 Gew-% und 70 Gew-%, der Legierungsanteil von Silber zwischen 28 Gew-% und 32 Gew-% und der Legierungsanteil von Nickel zwischen 1,8 Gew-% und 2,2 Gew-% beträgt.

**19.** Weichlot nach Anspruch 17 oder 18,
**dadurch gekennzeichnet, dass**
der Legierungsanteil von Wismut bei ca. 68 Gew-%, der Legierungsanteil von Silber bei ca. 30 Gew-% und der Legierungsanteil von Nickel bei ca. 2 Gew-% beträgt.

**20.** Weichlot, insbesondere Elektroniklot, bestehend aus den Legierungsbestandteilen Wismut, Silber und Nickel, wobei ein Legierungsanteil von Wismut zwischen 76 Gew-% und 80 Gew-%, ein Legierungsanteil von Silber zwischen 19 Gew-% und 21 Gew-% und ein Legierungsanteil von Nickel zwischen 1,8 Gew-% und 2,2 Gew-% beträgt.

**21.** Weichlot nach Anspruch 20,
**dadurch gekennzeichnet, dass**
der Legierungsanteil von Wismut bei ca. 78 Gew-%, der Legierungsanteil von Silber bei ca. 20 Gew-% und der Legierungsanteil von Nickel bei ca. 2 Gew-% beträgt.

**Claims**

**1.** Soft solder, in particular electronics solder, consisting of the alloying constituents bismuth, silver and copper, in which bismuth forms between 63% by weight and 77% by weight of the alloy, silver forms between 20% by weight and 30% by weight of the alloy, and copper forms between 0.1% by weight and 10% by weight of the alloy.

**2.** Soft solder according to Claim 1, **characterized in that** bismuth forms between 68% by weight and 72% by weight of the alloy, silver forms between 24% by weight and 26% by weight of the alloy, and copper forms between 4.8% by weight and 5.2% by weight of the alloy.

**3.** Soft solder according to Claim 1 or 2, **characterized in that** bismuth forms approx. 70% by weight of the alloy, silver forms approx. 25% by weight of the alloy and copper forms approx. 5% by weight of the alloy.

**4.** Soft solder, in particular electronics solder, consisting of the alloying constituents bismuth, copper and nickel, in which bismuth forms between 40% by weight and 99.8% by weight of the alloy, copper forms between 0.1% by weight and 20% by weight of the alloy and nickel forms between 0.1% by weight and 20% by weight of the alloy.

5. Soft solder according to Claim 4, **characterized in that** bismuth forms between 71% by weight and 85% by weight of the alloy, copper forms between 15% by weight and 25% by weight of the alloy and nickel forms between 0.1% by weight and 5% by weight of the alloy.

6. Soft solder according to Claim 4 or 5, **characterized in that** bismuth forms between 76% by weight and 80% by weight of the alloy, copper forms between 18.5% by weight and 21.5% by weight of the alloy and nickel forms between 1.8% by weight and 2.2% by weight of the alloy.

7. Soft solder according to one of Claims 4 to 6, **characterized in that** bismuth forms approx. 78% by weight of the alloy, copper forms approx. 20% by weight of the alloy and nickel forms approx. 2% by weight of the alloy.

8. Soft solder according to Claim 4, **characterized in that** bismuth forms between 82% by weight and 96% by weight of the alloy, copper forms between 5% by weight and 15% by weight of the alloy and nickel forms between 0.1% by weight and 3% by weight of the alloy.

9. Soft solder according to Claim 4 or 8, **characterized in that** bismuth forms between 87% by weight and 91% by weight of the alloy, copper forms between 9% by weight and 11% by weight of the alloy and nickel forms between 0.8% by weight and 1.2% by weight of the alloy.

10. Soft solder according to one of Claims 4, 8 or 9, **characterized in that** bismuth forms approx. 89% by weight of the alloy, copper forms approx. 10% by weight of the alloy and nickel forms approx. 1% by weight of the alloy.

11. Soft solder according to Claim 4, **characterized in that** bismuth forms between 87% by weight and 99.8% by weight of the alloy, copper forms between 2% by weight and 8% by weight of the alloy and nickel forms between 0.1% by weight and 3% by weight of the alloy.

12. Soft solder according to Claim 4 or 1, **characterized in that** bismuth forms between 92% by weight and 96% by weight of the alloy, copper forms between 4% by weight and 6% by weight of the alloy and nickel forms between 0.8% by weight and 1.2% by weight of the alloy.

13. Soft solder according to one of Claims 4, 11 or 12, **characterized in that** bismuth forms approx. 94% by weight of the alloy, copper forms approx. 5% by weight of the alloy and nickel forms approx. 1% by weight of the alloy.

14. Soft solder according to Claim 4, **characterized in that** bismuth forms between 88% by weight and 99.8% by weight of the alloy, copper forms between 2% by weight and 8% by weight of the alloy and nickel forms approx. 0.1% by weight of the alloy.

15. Soft solder according to Claim 4 or 14, **characterized in that** bismuth forms between 93% by weight and 97% by weight of the alloy, copper forms between 4% by weight and 6% by weight of the alloy and nickel forms approx. 0.1% by weight of the alloy.

16. Soft solder according to one of Claims 4, 14 or 15, **characterized in that** bismuth forms approx. 95% by weight of the alloy, copper forms approx. 5% by weight of the alloy and nickel forms approx. 0.1% by weight of the alloy.

17. Soft solder, in particular electronics solder, consisting of the alloying constituents bismuth, silver and nickel, in which bismuth forms between 61% by weight and 75% by weight of the alloy, silver forms between 25% by weight and 35% by weight of the alloy and nickel forms between 0.1% by weight and 5% by weight of the alloy.

18. Soft solder according to Claim 17, **characterized in that** bismuth forms between 66% by weight and 70% by weight of the alloy, silver forms between 28% by weight and 32% by weight of the alloy and nickel forms between 1.8% by weight and 2.2% by weight of the alloy.

19. Soft solder according to Claim 17 or 18, **characterized in that** bismuth forms approx. 68% by weight of the alloy, silver forms approx. 30% by weight of the alloy and nickel forms approx. 2% by weight of the alloy.

**20.** Soft solder according to, in particular electronics solder, consisting of the alloying constituents bismuth, silver and nickel, in which bismuth forms between 76% by weight and 80% by weight of the alloy, silver forms between 19% by weight and 21% by weight of the alloy and nickel forms between 1.8% by weight and 2.2% by weight of the alloy.

**21.** Soft solder according to Claim 20, **characterized in that** bismuth forms approx. 78% by weight of the alloy, silver forms approx. 20% by weight of the alloy and nickel forms approx. 2% by weight of the alloy.


**Revendications**

**1.** Métal d'apport de brasage tendre, en particulier de brasage électronique, composé des constituants d'alliage bismuth, argent et cuivre, dans lequel une fraction de bismuth de l'alliage est comprise entre 63% en poids et 77% en poids, une fraction d'argent de l'alliage entre 20% en poids et 30% en poids et une fraction de cuivre de l'alliage entre 0,1% en poids et 10% en poids.

**2.** Métal d'apport de brasage tendre selon la revendication 1, **caractérisé en ce que** la fraction de bismuth de l'alliage est comprise entre 68% en poids et 72% en poids, la fraction d'argent de l'alliage entre 24% en poids et 26% en poids et la fraction de cuivre de l'alliage entre 4,8% en poids et 5,2% en poids.

**3.** Métal d'apport de brasage tendre selon la revendication 1 ou 2, **caractérisé en ce que** la fraction de bismuth de l'alliage est d'environ 70% en poids, la fraction d'argent de l'alliage d'environ 25% en poids et la fraction de cuivre de l'alliage d'environ 5% en poids.

**4.** Métal d'apport de brasage tendre, en particulier brasage électronique, composé des constituants d'alliage bismuth, cuivre et nickel, dans lequel une fraction de bismuth de l'alliage est comprise entre 40% en poids et 99,8% en poids, une fraction de cuivre de l'alliage entre 0,1% en poids et 20% en poids et une fraction de nickel de l'alliage entre 0,1% en poids et 20% en poids.

**5.** Métal d'apport de brasage tendre selon la revendication 4, **caractérisé en ce que** la fraction de bismuth de l'alliage est comprise entre 71% en poids et 85% en poids, la fraction de cuivre de l'alliage entre 15% en poids et 25% en poids et la fraction de nickel de l'alliage entre 0,1% en poids et 5% en poids.

**6.** Métal d'apport de brasage tendre selon la revendication 4 ou 5, **caractérisé en ce que** la fraction de bismuth de l'alliage est comprise entre 76% en poids et 80% en poids, la fraction de cuivre de l'alliage entre 18,5% en poids et 21,5% en poids et la fraction de nickel de l'alliage entre 1,8% en poids et 2,2% en poids.

**7.** Métal d'apport de brasage tendre selon l'une quelconque des revendications 4 à 6, **caractérisé en ce que** la fraction de bismuth de l'alliage est d'environ 78% en poids, la fraction de cuivre de l'alliage d'environ 20% en poids et la fraction de nickel de l'alliage d'environ 2% en poids.

**8.** Métal d'apport de brasage tendre selon la revendication 4, **caractérisé en ce que** la fraction de bismuth de l'alliage est comprise entre 82% en poids et 96% en poids, la fraction de cuivre de l'alliage entre 5% en poids et 15% en poids et la fraction de nickel de l'alliage entre 0,1% en poids et 3% en poids.

**9.** Métal d'apport de brasage tendre selon la revendication 4 ou 8, **caractérisé en ce que** la fraction de bismuth de l'alliage est comprise entre 87% en poids et 91% en poids, la fraction de cuivre de l'alliage entre 9% en poids et 11% en poids et la fraction de nickel de l'alliage entre 0,8% en poids et 1,2% en poids.

**10.** Métal d'apport de brasage tendre selon l'une quelconque des revendications 4, 8 ou 9, **caractérisé en ce que** la fraction de bismuth de l'alliage est d'environ 89% en poids, la fraction de cuivre de l'alliage d'environ 10% en poids et la fraction de nickel de l'alliage d'environ 1% en poids.

**11.** Métal d'apport de brasage tendre selon la revendication 4, **caractérisé en ce que** la fraction de bismuth de l'alliage est comprise entre 87% en poids et 99,8% en poids, la fraction de cuivre de l'alliage entre 2% en poids et 8% en poids et la fraction de nickel de l'alliage entre 0,1% en poids et 3% en poids.

**12.** Métal d'apport de brasage tendre selon la revendication 4 ou 11, **caractérisé en ce que** la fraction de bismuth de l'alliage est comprise entre 92% en poids et 96% en poids, la fraction de cuivre de l'alliage entre 4% en poids et 6% en poids et la fraction de nickel de l'alliage entre 0,8% en poids et 1,2% en poids.

**13.** Métal d'apport de brasage tendre selon l'une quelconque des revendications 4, 11 ou 12, **caractérisé en ce que** la fraction de bismuth de l'alliage est d'environ 94% en poids, la fraction de cuivre de l'alliage d'environ 5% en poids et la fraction de nickel de l'alliage d'environ 1% en poids.

**14.** Métal d'apport de brasage tendre selon la revendication 4, **caractérisé en ce que** la fraction de bismuth de l'alliage est comprise entre 88% en poids et 99,8% en poids, la fraction de cuivre de l'alliage entre 2% en poids et 8% en poids et la fraction de nickel de l'alliage est d'environ 0,1% en poids.

**15.** Métal d'apport de brasage tendre selon la revendication 4 ou 14, **caractérisé en ce que** la fraction de bismuth de l'alliage est comprise entre 93% en poids et 97% en poids, la fraction de cuivre de l'alliage entre 4% en poids et 6% en poids et la fraction de nickel de l'alliage est d'environ 0,1% en poids.

**16.** Métal d'apport de brasage tendre selon l'une quelconque des revendications 4, 14 ou 15, **caractérisé en ce que** la fraction de bismuth de l'alliage est d'environ 95% en poids, la fraction de cuivre de l'alliage d'environ 5% en poids et la fraction de nickel de l'alliage d'environ 0,1% en poids.

**17.** Métal d'apport de brasage tendre, en particulier brasage électronique, composé des constituants d'alliage bismuth, argent et nickel, dans lequel une fraction de bismuth de l'alliage est comprise entre 61% en poids et 75% en poids, une fraction d'argent de l'alliage entre 25% en poids et 35% en poids et une fraction de nickel de l'alliage entre 0,1% en poids et 5% en poids.

**18.** Métal d'apport de brasage tendre selon la revendication 17, **caractérisé en ce que** la fraction de bismuth de l'alliage est comprise entre 66% en poids et 70% en poids, la fraction d'argent de l'alliage entre 28% en poids et 32% en poids et la fraction de nickel de l'alliage entre 1,8% en poids et 2,2% en poids.

**19.** Métal d'apport de brasage tendre selon la revendication 17 ou 18, **caractérisé en ce que** la fraction de bismuth de l'alliage est d'environ 68% en poids, la fraction d'argent de l'alliage d'environ 30% en poids et la fraction de nickel de l'alliage d'environ 2% en poids.

**20.** Métal d'apport de brasage tendre, en particulier de brasage électronique, composé des constituants d'alliage bismuth, argent et nickel, dans lequel une fraction de bismuth de l'alliage est comprise entre 76% en poids et 80% en poids, une fraction d'argent de l'alliage entre 19% en poids et 21% en poids et une fraction de nickel de l'alliage entre 1,8% en poids et 2,2% en poids.

**21.** Métal d'apport de brasage tendre selon la revendication 20, **caractérisé en ce que** la fraction de bismuth de l'alliage est d'environ 78% en poids, la fraction d'argent de l'alliage d'environ 20% en poids et la fraction de nickel de l'alliage d'environ 2% en poids.

FIG 1

FIG 2

# FIG 3

EP 1 429 889 B1

# FIG 4

FIG 5

EP 1 429 889 B1

EP 1 429 889 B1

FIG 6

18

FIG 7